# EUROPÄISCHE PATENTANMELDUNG

(11) **EP 3 988 429 A1**
(43) Veröffentlichungstag der Anmeldung: **27.04.2022**
(21) Anmeldenummer: 21201982.2
(22) Anmeldetag: 11.10.2021
(51) Int. Cl.: B62D 15/02, G05D 1/00, G08G 1/14

(54) **VERFAHREN ZUM BETREIBEN EINES AUTONOM ODER ASSISTIERT FAHRENDEN KRAFTFAHRZEUGS IN EINER EINRICHTUNG MIT EINER MEHRZAHL VON STANDPLÄTZEN FÜR KRAFTFAHRZEUGE, VERFAHREN ZUM VERWALTEN EINER MEHRZAHL VON KRAFTFAHRZEUGEN IN EINER SOLCHEN EINRICHTUNG, SOWIE KRAFTFAHRZEUG**

(30) Priorität: 22.10.2020 DE 102020213380
(71) Anmelder: VOLKSWAGEN AG, 38440 Wolfsburg (DE)
(72) Erfinder: Kopischke, Stephan, 38442 Wolfsburg (DE)

(57) **Zusammenfassung**

Die Erfindung betrifft ein Verfahren zum Betreiben eines autonom oder assistiert fahrenden Kraftfahrzeugs (1) in einer Einrichtung mit einer Mehrzahl von Standplätzen für Kraftfahrzeuge, bei dem das Kraftfahrzeug (1) nacheinander eine Folge von Standplätzen einnimmt, die Teil einer durch externe Vorgaben definierten Trajektorie (I, II, III) für das Kraftfahrzeug sind.

## Beschreibung

Die vorliegende Erfindung betrifft ein Verfahren zum Betreiben eines autonom oder assistiert fahrenden Kraftfahrzeugs in einer Einrichtung mit einer Mehrzahl von Standplätzen für Kraftfahrzeuge (etwa: Parkhaus und Dergleichen). Sie betrifft auch ein Verfahren zum Verwalten einer Mehrzahl von Kraftfahrzeugen sowie ein zur Umsetzung dieser Verfahren geeignetes Kraftfahrzeug.
Der Begriff "autonom" bezeichnet hier Systeme mit SAE Level größer oder gleich 3. Das hier beschriebene Verfahren ist insbesondere auch für Systeme vom SAE Level 2 (d.h. assistierte Systeme) anwendbar. Ein Vorteil besteht darin, dass diese aktuell verfügbar und kostengünstig sind.
Um diese bei dem Verfahren einsetzen zu können, benötigt man einen Überwacher (normalerweise: der Fahrer), dessen Rolle in diesem Fall der Parkplatzbetreiber einnimmt.

In der DE 10 2017 007 204 A1 ist ein sogenanntes Valet-Parking beschrieben. Hierbei übergibt der Fahrer des Kraftfahrzeugs an einer Parkeinrichtung sein Kraftfahrzeug an eine für den Anbieter der Parkeinrichtung arbeitende Person, die sodann das Kraftfahrzeug einparkt. Aktuelle Fahrerassistenzsysteme erlauben auch, dass das Kraftfahrzeug eingeparkt wird, ohne dass der Fahrer sich noch im Kraftfahrzeug befindet. Zur Sicherstellung der Überwachungsaufgaben des Fahrers wird eine technische Kommunikation mit dem Kraftfahrzeug über typischerweise den Funkschlüssel oder ein Smartphone oder Dergleichen eingesetzt. Hier wird immer das Kraftfahrzeug vom Fahrer veranlasst, sich zu bewegen. Um automatisiert Entscheidungen über Positionswechsel in Parkhäusern vorzunehmen, müssen Kraftfahrzeuge über eine aufwändige Technik (Sensoren, Aktoren, Redundanzen) verfügen, was zu teuer ist, um in großem Maßstab umgesetzt werden zu können. Neben der Parkassistenz ist ferner üblich, dass ein Kraftfahrzeug eine Wegstrecke lernt, solange der Fahrer es führt, und später diese Wegstrecke autonom fährt. Dies ist auch in Parkhäusern und dergleichen umsetzbar.

Die WO 2017/036639 A1 offenbart ein Verfahren zum Betreiben von mehreren hintereinander parkenden Kraftfahrzeugen, wobei bei einem Ausparken von einem der Kraftfahrzeuge die hinter dem einen Kraftfahrzeug parkenden Kraftfahrzeuge fahrerlos sukzessive nachgerückt werden. Weiterhin offenbart die US 10 755 570 B1 ein Verfahren zum Kontrollieren einer Parkeinrichtung. Überdies ist aus der DE 102 46 956 A1 eine Anlage zum telematisch gesteuerten Kolonnenparken von Lastkraftwagen, Lastzügen und Bussen bekannt.

Das Parken in Parkeinrichtungen wie Parkhäusern oder sonstigen Parkplätzen ist noch nicht ausreichend effizient und sorgt für Zeitverschwendung beim Fahrer und birgt das Risiko von Parkremplern.

Der Erfindung liegt nun die Aufgabe zugrunde, die bekannten Vorgehensweisen zum Handhaben von Kraftfahrzeugen in Parkeinrichtungen zu verbessern.

Die Aufgabe wird durch ein Verfahren zum Betreiben eines autonom fahrenden Kraftfahrzeugs in einer solchen Einrichtung und ein Verfahren zum Verwalten einer Mehrzahl von Kraftfahrzeugen in einer solchen Einrichtung gelöst, und auch durch ein Kraftfahrzeug, mithilfe dessen diese Verfahren umsetzbar sind.

Bei dem erfindungsgemäßen Verfahren nimmt das Kraftfahrzeug nacheinander eine Folge von Standplätzen ein, die Teil einer durch externe Vorgaben definierten Trajektorie für das Kraftfahrzeug sind. Unter dem Einnehmen eines Standplatzes wird vorliegend in einer Alternative verstanden, dass das Kraftfahrzeug auf dem Standplatz zum Halt kommt. Gilt das für mehrere Standplätze, dann wird die Folge von Standplätzen in diskreten zeitlichen Schritten durchlaufen. In der anderen Alternative bewegt sich das Kraftfahrzeug über den Standplatz, allerdings eher langsam, beispielsweise mit weniger als 15 km/h, weiter eingeschränkt weniger als 10 km/h, weiter eingeschränkt weniger als 5 km/h. Gilt das für mehrere Standplätze, dann wird die Folge von Standplätzen kontinuierlich durchlaufen. Anders als bei sonstigem Fahren wird die Trajektorie extern vorgegeben, etwa durch den Betreiber der Parkeinrichtung. Auch kann vorgesehen sein, dass anders als sonst beim Fahren die Türen verriegelt sind (wie beim Parken). Das Kraftfahrzeug kommt somit entweder gar nicht oder auf zumindest einigen der Standplätze zum Halt.

Die verschiedenen Trajektorien werden in einem Ausführungsbeispiel unterschiedlich schnell durchfahren und realisieren so die individuell festgelegte (aber änderbare) Parkzeit.

Dieses Verfahren hat den Vorteil, dass das Kraftfahrzeug nicht selbstständig Standplätze aussuchen muss, so dass der Betreiber einer Parkeinrichtung den Kraftfahrzeugen Standplätze geschickt zuweisen kann. Die Packungsdichte wird dadurch erhöht. Durch das Verwenden von Trajektorien, die eine Folge von Standplätzen definieren, ist insbesondere auch ein "Kolonnen-Hopping" möglich, d.h. ganze Kolonnen von Kraftfahrzeugen bewegen sich nacheinander auf der Trajektorie. Das Kraftfahrzeug bewegt sich von Parkplatz zu Parkplatz innerhalb der Kolonne. Es handelt sich in einem Ausführungsbeispiel um mindestens drei Standplätze in der Folge.

Bei dem Verfahren werden an der Datenverarbeitungseinrichtung Informationen zur Aufenthaltszeit des Kraftfahrzeugs ermittelt oder eingegeben, und die Trajektorie wird in Abhängigkeit von dieser Aufenthaltszeit ausgewählt. Mit anderen Worten kann der Fahrzeugführer die geplante Parkzeit vorgeben, und ein Kolonnenfahren mehrerer Kraftfahrzeuge kann passend erfolgen. Der Betreiber der Parkeinrichtung kann das Kraftfahrzeug zunächst auf einen eher abgelegenen Parkplatz stellen und bis zum Ende der geplanten Parkdauer hin immer weiter zu einem Abgabeort fahren, an dem der Fahrzeugführer das Kraftfahrzeug wieder übernimmt.

Die externen Vorgaben erfolgen bei einem Ausführungsbeispiel mittels einer Datenverarbeitungseinrichtung (insbesondere eines zentralen Rechners beim Anbieter der Standplätze, also im Parkhaus und Dergleichen). Die Datenverarbeitungsrichtung übermittelt zumindest einmalig Daten zur Trajektorie über eine Datenschnittstelle an eine Steuereinheit des Kraftfahrzeugs, und die Steuereinheit des Kraftfahrzeugs steuert dieses dann an. Es ist also keine Fernsteuerung des Kraftfahrzeugs vorgesehen, sondern das autonom fahrende Kraftfahrzeug nutzt seine Funktion zum autonomen Fahren, erhält aber - ähnlich wie dies bei der Navigation üblich ist ― eine Vorgabe hinsichtlich der Fahrtstrecke, nur dass sehr kleine Strecken (von Standplatz zu Standplatz) durchlaufen werden. Technisch handelt es sich um die innovative Nutzung teils bekannter und teils neuartiger Funktionen.

Bei einer Ausführungsform ist hierzu vorgesehen, dass aufgrund einer Eingabe an der Datenverarbeitungseinrichtung ein Wechsel der Trajektorie bewirkt werden kann. Der Fahrer kann beispielsweise Parkzeit nachbuchen oder umgekehrt mitteilen, dass er früher als beabsichtigt zurückkommt. Bei einem Ausführungsbeispiel hierzu kann das Eingeben von Daten an die Datenverarbeitungseinrichtung mittels einer drahtlos kommunizierenden Vorrichtung erfolgen. Er kann etwa sein Smartphone, eine Smartwatch, einen Tabletcomputer, Wearables und/oder dergleichen intelligente Vorrichtungen nutzen. Die Parkdauer kann indirekt ermittelt werden, wenn der Benutzer dem Betreiber der Parkeinrichtung eine bestimmte Summe für das Bezahlen des Parkens freigibt.

Naturgemäß kann auch unmittelbar eine Trajektorie ausgewählt werden, die dann umgekehrt die Parkdauer definiert. Dies kann sinnvoll sein, wenn nur wenige Trajektorien zur Verfügung stehen und aufgrund schwankender Belegung des Parkeinrichtung nicht immer gleich schnell durchlaufen werden.

Bei einer Ausführungsform ist entsprechend die Datenverarbeitungseinrichtung mit einem Bezahlsystem gekoppelt. Der Fahrzeugführer, der sein Kraftfahrzeug abgibt, kann bei Buchung der Parkdauer zugleich mit seiner Kreditkarte und/oder dergleichen Bankinformation dafür sorgen, dass der Betreiber der Parkeinrichtung das Geld unmittelbar abbucht oder zumindest die Abbuchung anmeldet.

Das erfindungsgemäße Verfahren zum Verwalten einer Mehrzahl von Kraftfahrzeugen in einer Parkeinrichtung mit einer Mehrzahl von Standplätzen beinhaltet, dass durch eine Datenverarbeitungseinrichtung der Parkeinrichtung bewirkt wird, dass zumindest ein Teil der verwalteten Kraftfahrzeuge eine Folge von Standplätzen gemäß einer jeweiligen von der Datenverarbeitungseinrichtung vorgegebenen Trajektorie durchläuft. Vorzugsweise können die Kraftfahrzeuge gruppenweise eine gleiche Folge von Standplätzen durchlaufen, also "Kolonnen-Hopping" machen beziehungsweise in Kolonne rollen.

Bei dem Verfahren durchlaufen mehrere Kraftfahrzeuge in Abhängigkeit von jeweils unterschiedlichen Bedingungen (etwa: von unterschiedlichen vorgesehenen Parkzeiten oder aufgrund eines Status des Benutzers beim Dienstanbieter) unterschiedliche Trajektorien. Dadurch kann maßgeschneidert die Bewegung der einzelnen Kraftfahrzeuge in der Parkeinrichtung erfolgen. Es gibt die Kolonne für diejenigen Kraftfahrzeuge, die sehr schnell wieder abgeholt werden, eine Kolonne für Kraftfahrzeuge, die eine mittlere Parkdauer benötigen, und weitere Kolonnen, bis hin zur letzten, wo die Parkdauer sehr lang ist. Fahrzeugführern mit hohem Status beim Dienstanbieter können bevorzugte Kolonnen zugeteilt werden, damit ein bevorzugter, besonders günstiger Abholplatz vom Kraftfahrzeug zeitgenau erreicht wird.

Weiterhin kann ein Kraftfahrzeug vorgesehen sein, welches eine Steuereinheit zum autonomen Fahren und eine Schnittstelle aufweist, über welche Daten zum Definieren einer vom Kraftfahrzeug zu durchlaufenden Trajektorie von einer Datenverarbeitungseinrichtung außerhalb des Kraftfahrzeugs empfangbar sind. Bei einem Ausführungsbeispiel ist die Steuereinheit ausgelegt zu bewirken, dass das Kraftfahrzeug nacheinander eine Folge von Standplätzen in Abhängigkeit von den Daten zum Definieren einer Trajektorie anfährt.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: schematisch eine Folge von Kraftfahrzeugen in einem Parkhaus, die sich gemäß dem Verfahren gemäß einer Ausführungsform der Erfindung bewegen, und
- Fig. 2: die Schritte einer Ausführungsform des erfindungsgemäßen Verfahrens in einem Flussschaubild.

Gleiche oder funktionsgleiche Elemente sind in den Figuren mit den gleichen Bezugszeichen versehen.

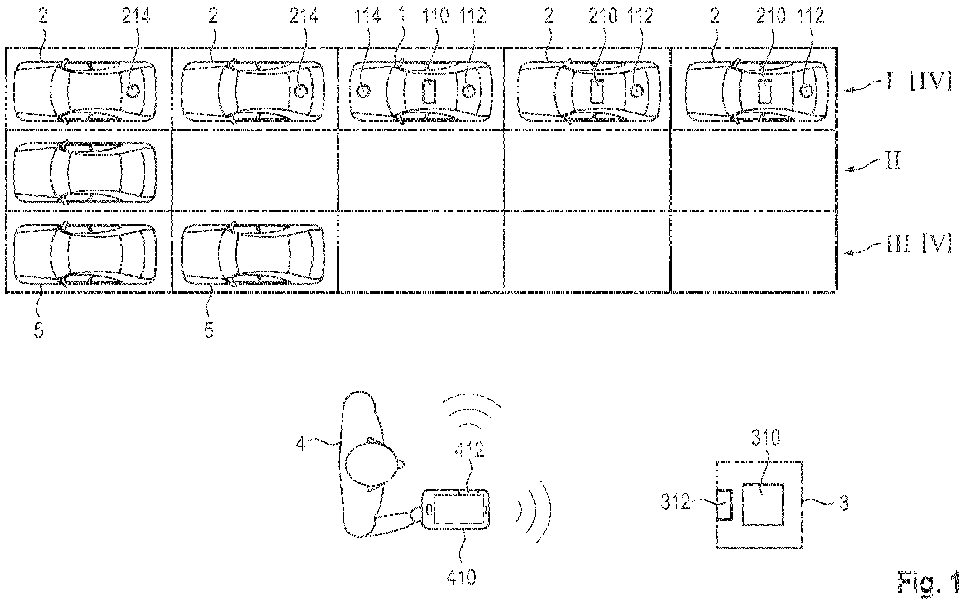

Die Fig. 1 zeigt schematisch ein Kraftfahrzeug 1 als Teil einer Kolonne weiterer Kraftfahrzeuge 2, wobei sich die Kraftfahrzeuge 1 und 2 autonom von Parkplatz zu Parkplatz bewegen, hierbei aber Vorgaben einer zentralen Einrichtung 3 seitens des Dienstanbieters, also des Betreibers des Parkhauses oder Dergleichen folgen. Zum autonomen Fahren weist das Kraftfahrzeug 1 eine Steuereinheit 110 auf, die Kraftfahrzeuge 2 eine Steuereinheit 210. Die zentrale Einrichtung 3 weist eine Datenverarbeitungseinrichtung 310 auf. Über Sende-Empfangs-Schnittstellen 112 und 212 können die Kraftfahrzeuge mit einer entsprechenden Sende-Empfangseinrichtung 312 bei der zentralen Einrichtung 3 kommunizieren. Optional können die Kraftfahrzeuge 1 und 2 über Kommunikationsschnittstellen 114 und 214 miteinander kommunizieren. Die Erfindung ist auch bei assistiert fahrenden Kraftfahrzeugen umsetzbar.

Ein Fahrzeugführer, in Fig. 1 symbolisch gezeigt und mit 4 bezeichnet, verlässt sein Kraftfahrzeug 1 und führt eine intelligente Vorrichtung, wie etwa ein Smartphone 410, mit sich, die beziehungsweise das über (s)eine Sende- und Empfangseinrichtung 412 mit der Sende- Empfangseinrichtung 312 und der Sende-Empfangseinrichtung 112 seines Kraftfahrzeugs 1 kommunizieren kann. Er kann insbesondere eine Parkzeit buchen. In Abhängigkeit von der Parkzeit wählt die Datenverarbeitungseinrichtung 310 eine von drei Fahrspuren I, II oder III aus, über die sich das Kraftfahrzeug 1 bewegt. Die Fahrspur I ist beispielsweise für Kraftfahrzeuge gedacht, die lediglich zwischen 15 und 30 Minuten geparkt werden sollen, die Fahrspur II für Kraftfahrzeuge, die zwischen 30 Minuten und 1 Stunde geparkt bleiben sollen, und die Fahrspur III für Kraftfahrzeuge, die über 1 Stunde geparkt werden sollen. Mittels des Smartphones 410 kann auch eine Handlung gegenüber einer Bank erfolgen, also bereits dem Dienstanbieter das Parken in seiner Parkeinrichtung vergütet werden.

Das Kraftfahrzeug 1 bewegt sich nun von Parkplatz zu Parkplatz innerhalb der Kolonne I, wobei immer das vorausgehende Kraftfahrzeug 2 zunächst einen leeren Standplatz einnimmt, dann folgt das ihm folgende Kraftfahrzeug 2, bis schließlich das Kraftfahrzeug 1 vor einem leeren Standplatz steht. Vor dem Erreichen eines Abholplatzes IV können die Kraftfahrzeuge noch auf vorläufige Parkplätze V geparkt werden, die sich in der Nähe des Abholplatzes IV befinden, damit der Fahrzeugführer 4 über eine gewisse Flexibilität verfügt, was den Abholzeitpunkt angeht.

Der Fahrzeugführer 4 kann mittels seines Smartphones 410 eine Nachbuchung von Zeit durchführen. In diesem Fall verlässt das Kraftfahrzeug 1 die Fahrspurt I und wechselt in eine Kolonne für eine längere Zeitdauer (siehe beispielsweise die Kraftfahrzeuge 5). Bucht im Beispielsfall der Fahrzeugführer 4 statt einer Zeitdauer von 20 Minuten zusätzlich noch 1 Stunde nach, wechselt das Kraftfahrzeug 1 von der Fahrspur I auf die Fahrspur III.

Die Fahrspuren I, II und III sind zwar im Bild als gleich lang gezeigt, naturgemäß kann hier jede Art von flexibler Handhabung vorgesehen sein: Feste Spuren können verschieden lang sein. Auch können unterschiedliche Zuteilungen zu geplanten Parkzeiten erfolgen. Die Kraftfahrzeuge müssen nicht zwangsläufig gerade hintereinander von Standplatz zu Standplatz bewegt werden, sondern können komplexere Muster durchlaufen.

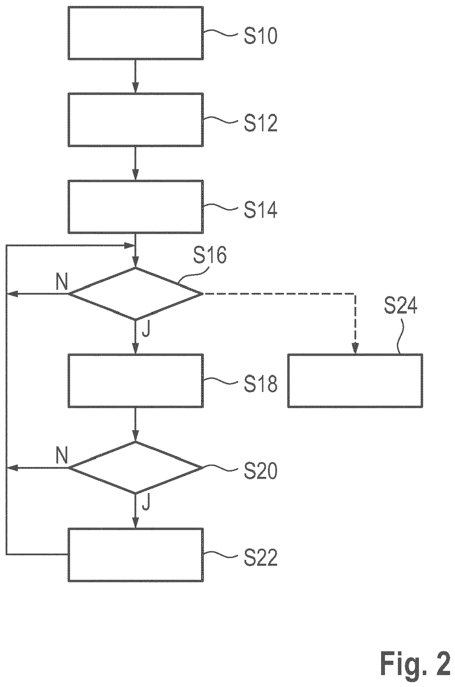

Das nachfolgend anhand von Fig. 2 erläuterte Verfahren gemäß einer erfindungsgemäßen Ausführungsform beginnt in Schritt S10 mit dem Beginn des Parkens des Kraftfahrzeugs. In Schritt S12 wird durch den Fahrzeugführer 4 eine Buchung beim Dienstanbieter vorgenommen. Im Schritt S14 wird sein Kraftfahrzeug 1 zunächst auf einen ersten Standplatz eingeparkt. Im selben Schritt übermittelt die Datenverarbeitungseinrichtung 310 eine Trajektorie an das Kraftfahrzeug 1, das in der Nachfolge ständig dieser Trajektorie folgt. In Schritt S16 wird geprüft, ob sich das dem Kraftfahrzeug 1 vorangehende Kraftfahrzeug 2 von seinem Standplatz bewegt hat, so dass dieser frei ist. Falls dies nicht der Fall ist, wird nach einer vorbestimmten Zeitdauer erneut geprüft. Falls dies der Fall ist, wird zu Schritt S18 übergegangen, und das Kraftfahrzeug 1 wechselt seinen Standplatz zu dem, an dem sich zuvor das Kraftfahrzeug 2 befand. In Schritt S20 wird geprüft, ob der Fahrzeugführer 4 eine Umbuchung vorgenommen hat, insbesondere eine Zusatzparkdauer nachgebucht hat. Ist dies nicht der Fall, wird wieder zum Schritt S16 übergegangen. Ist dies hingegen der Fall, wird zum Schritt S22 übergegangen, demgemäß das Kraftfahrzeug 1, wie oben bereits beschrieben, die Fahrspur wechselt, also sodann eine andere Trajektorie durchläuft. Nach dem Schritt S22 wird wieder zum Schritt S16 übergegangen, wobei das vorangehende Kraftfahrzeug nunmehr anhand der neuen Trajektorie definiert ist.

In Schritt S16 wird irgendwann festgestellt, dass das Kraftfahrzeug das Ende der Trajektorie erreicht hat. In diesem Fall wird zum Schritt S24 übergegangen, und das Kraftfahrzeug auf den Abholplatz IV oder auf einen vorläufigen Parkplatz V gefahren. Entsprechende Informationen können zu diesem Zeitpunkt oder auch vorher über die Datenverarbeitungseinrichtung 310 an die Steuereinheit 110 des Kraftfahrzeugs 1 gegeben werden.

Der Fahrer besitzt die Option, im Fahrzeug sitzen zu bleiben (ohne direkten Einfluss) oder sich außerhalb des Fahrzeuges aufzuhalten (z.B. einzukaufen, zu speisen etc.). Befindet sich der Fahrer außerhalb des Fahrzeuges, kann er während der Parkphase optional die Türen abschließen aber wahlweise den Kofferraum für Mehrwertdienste offen lassen (z.B. werden Einkäufe vom Geschäft direkt zum Fahrzeug gebracht, Paketdienste etc.).

Andere Mehrwertdienste z.B. Laden oder Waschen des Fahrzeuges sind während der Parkdauer möglich und werden optional in der Parkeinrichtung technisch vorgehalten.

Die Überwachung des Parkplatzes durch den Betreiber kann entweder durch Personal oder automatisiert erfolgen.

Anstelle des zu der Figur 2 beschriebenen Parkens auf Standplätzen kann auch vorgesehen sein, dass die Kraftfahrzeuge auf zumindest einem Teil der Trajektorien durchgehend fahren (rollen, z.B. mit 10 km/h). Das Auto vollzieht in Dauerfahrt eine Warteschleife. Hierbei sind anders als sonst etwa die Türen verriegelt. Der externe Service (Parkanbieter) überwacht die Dauerfahrt.

Durch die Erfindung werden Parkraum und die Zeit der Benutzer von Kraftfahrzeugen besser genutzt.

### Bezugszeichenliste

- 1: Kraftfahrzeug
- 2: weitere Kraftfahrzeuge
- 3: zentrale Einrichtung
- 4: Fahrzeugführer
- 5: Kraftfahrzeuge
- 110: Steuereinheit
- 112: Sende-Empfangs-Schnittstelle
- 114: Kommunikationsschnittstelle
- 210: Steuereinheit
- 212: Sende-Empfangs-Schnittstelle
- 214: Kommunikationsschnittstelle
- 310: Datenverarbeitungseinrichtung
- 312: Sende-Empfangseinrichtung
- 410: Smartphone
- 412: Sende- und Empfangseinrichtung

- I-III: Fahrspur
- IV: Abholplatz
- V: vorläufiger Parkplatz
- S10, S12, S14, S16, S18, S20, S22, S24: Schritte einer Ausführungsform des erfindungsgemäßen Verfahrens

## Patentansprüche

1. Verfahren zum Betreiben eines autonom oder assistiert fahrenden Kraftfahrzeugs (1) in einer Einrichtung mit einer Mehrzahl von Standplätzen für Kraftfahrzeuge (1, 2, 5), bei dem das Kraftfahrzeug (1) nacheinander eine Folge von Standplätzen einnimmt, die Teil einer durch externe Vorgaben definierten Trajektorie (I, II, III) für das Kraftfahrzeug sind, wobei sich das Kraftfahrzeug (1) von Parkplatz zu Parkplatz innerhalb einer Kolonne bewegt und wobei an der Datenverarbeitungseinrichtung (310) Informationen zu einer Aufenthaltszeit des Kraftfahrzeugs (1) ermittelt oder eingegeben werden, und wobei die Trajektorie (I, II, III) in Abhängigkeit von der Aufenthaltszeit ausgewählt wird.

2. Verfahren nach Anspruch 1, bei dem die externe Vorgabe mittels einer Datenverarbeitungseinrichtung (310) erfolgt, welche zumindest einmalig Daten zur Trajektorie über eine Datenschnittstelle (312, 112) an eine Steuereinheit (110) des Kraftfahrzeugs (1, 2, 5) übermittelt, wobei die Steuereinheit (110) das Kraftfahrzeug ansteuert.

3. Verfahren nach einem der vorhergehenden Ansprüche, bei dem aufgrund einer Eingabe an der Datenverarbeitungseinrichtung (310) ein Wechsel der Trajektorie (I, II, III) und somit eine Änderung der Parkdauer bewirkt werden kann.

4. Verfahren nach einem der vorhergehenden Ansprüche, bei dem das Eingeben von Daten an die Datenverarbeitungseinrichtung (310) mittels einer drahtlos kommunizierenden Vorrichtung erfolgt, insbesondere eines Smartphones (410), einer Smartwatch, eines Tabletcomputers, und/ oder von Wearables.

5. Verfahren nach einem der einem der vorhergehenden Ansprüche, bei dem die Datenverarbeitungseinrichtung (310) mit einem Bezahlsystem gekoppelt ist.

6. Verfahren zum Verwalten einer Mehrzahl von Kraftfahrzeugen (1, 2, 5) in einer Parkeinrichtung mit einer Mehrzahl von Standplätzen, wobei durch eine Datenverarbeitungseinrichtung (310) der Parkeinrichtung bewirkt wird, dass zumindest ein Teil der verwalteten Kraftfahrzeuge (1, 2, 5) eine Folge von Standplätzen gemäß einer jeweiligen von der Datenverarbeitungseinrichtung vorgegebenen Trajektorie (I, II, III) innerhalb einer Kolonne durchläuft, wobei mehrere Kraftfahrzeuge (1, 2, 5) in Abhängigkeit von jeweils unterschiedlichen Bedingungen, insbesondere von unterschiedlichen vorgesehenen Parkzeiten, unterschiedliche Trajektorien (I, II, III) durchlaufen.
